Europäisches Patentamt

**European Patent Office**

**Office européen des brevets**

(11) Publication number: **0 328 285**
A2

# EUROPEAN PATENT APPLICATION

(21) Application number: **89300899.5**

(22) Date of filing: **31.01.89**

(51) Int. Cl.⁴: **G21C 19/06 , G21F 9/36 , G21F 1/02 , G21F 3/04**

(30) Priority: **08.02.88 GB 8802768**

(43) Date of publication of application:
**16.08.89 Bulletin 89/33**

(84) Designated Contracting States:
**DE FR GB SE**

(71) Applicant: **UNITED KINGDOM ATOMIC ENERGY AUTHORITY**
**11 Charles II Street**
**London SW1Y 4QP(GB)**

(72) Inventor: **Robinson, Granville**
**White Lodge Orchard Norley Road**
**Cuddington Cheshire CW8 2LB(GB)**

(74) Representative: **Neukom, John Ulysses et al**
**Patents Branch United Kingdom Atomic**
**Energy Authority 11Charles II Street**
**London SW1Y 4QP(GB)**

(54) **Radioactive waste storage system.**

(57) Radioactive waste material packaged in drums is stored by stacking of the drums in hollow columns (18) laid out in an array only partially bounded by shielding walls (10, 12, 14), the remainder of the shielding for completing the shielded enclosure being constituted by the filling of certain of the columns (18S) with fluent radiation-attenuating material. Such material is evacuable when desired to enable this boundary to be reconstituted in others of the columns in order that the shielded enclosure can be enlarged.

EP 0 328 285 A2

Fig.1.

# Radioactive waste storage system

This invention relates to the storage of radioactive waste material.

Currently there are various categories of radioactive waste material distinguished according to the level of activity. For that characterised as intermediate level, and emissive of gamma radiation, surface storage after conditioning and packaging, such as by cementation or bitumenisation in drums, is now becoming common but requires that the enclosure accommodating the packaged material should be shielded adequately against egress of radiation to the surroundings.

Adequate shielding generally calls for relatively massive thicknesses of radiation-attenuating material such as concrete. Thus, an enclosure intended to offer a certain capacity, typically in terms of being able to cater for waste arisings over a number of years, perhaps running to a decade, represents a capital investment which in large, albeit diminishing, measure is undesirably far in advance of actual utilisation.

According to the invention there is provided a shielded enclosure for the storage of radioactive waste material in which a part of the shielding is constituted by a hollow structure filled with a fluent radiation-attenuating material which is evacuable when desired for reconstituting the shielding at a different boundary.

It is therefore possible by means of the invention for the boundaries of the enclosure to be enlarged from time to time thereby to enable the capacity to grow more in line with the receipt of material for storage over the years and hence to defer some of the associated capital cost.

By using hollow columns for the hollow structure, a dual function is possible in that, when suitably sized internally, they will accommodate a stack of drums of waste material and, where the boundary is to be constituted, they can be filled instead with the fluent radiation-attenuating material. In an extensive array of such columns, all being replications to a standard size laid out to a standard pitch, the said boundary preferably comprises two rows of said filled shielding columns arranged to minimise possible radiation shine-through paths.

The radiation-attenuating material may be of a particulate nature, eg sand, or it may comprise a thixotropic gel which can be readily rendered free flowing by agitation of the gel.

In one embodiment of the invention, the system has all but one of its side boundaries constituted by shielding walls, the remaining side boundary comprising said shielding columns. However, in an alternative embodiment the enclosure may have two or more, or even all, of its side boundaries formed by respective sets of said shielding columns.

The fluent material may be contained within a liquid-impermeable sheath lining the respective hollow column to provide a vapour barrier to prevent ingress of moisture which might otherwise affect fluidisation or free flow of the fluent material when this is required to be evacuated from the shielding columns.

The invention will now be described by way of example only with reference to the accompanying drawings in which:

Figure 1 is a diagrammatic plan view of a storage system according to the invention;

Figure 2 is a similar view to Figure 1 showing the storage system after expansion;

Figure 3 is a diagrammatic sectional view of a single storage/shielding column of the system;

Figure 4 is a plan view of a shield plug for the column;

Figure 5 is an across the flats sectional view of the plug;

Figure 6 is a plan view of a stabilising unit of the system;

Figure 7 is an across the flats sectional view of the stabilising unit;

Figure 8 is a plan view of one of the sleeves from which the column is fabricated;

Figure 9 is a radially sectioned view of the sleeve;

Figure 10 is a fragmentary sectional view of the top end of a column;

Figure 11 is a diagrammatic plan view showing the use of in-fill units employed with the shielding columns; and

Figure 12 is an axonometric view of two of the in-fill units.

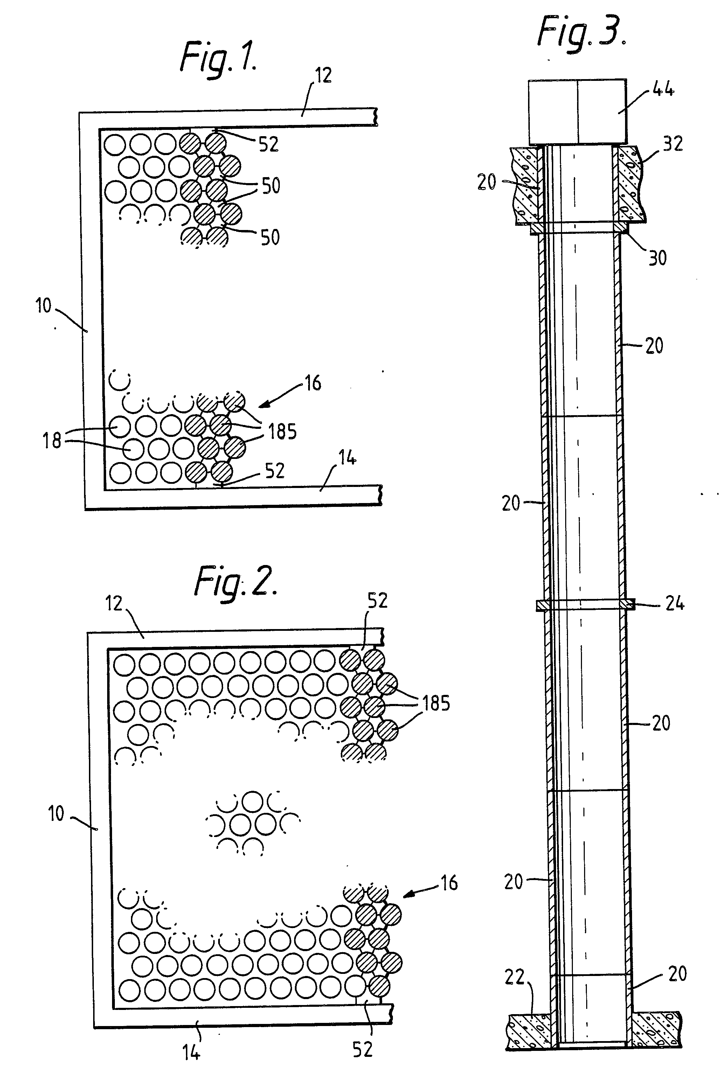

Referring to Figures 1 and 2, the storage system shown comprises an enclosure which, in this case, has three side boundaries of a permanent nature in the form of radiation shielding walls 10, 12, 14 and a fourth side boundary, generally depicted by reference 16, which spans an otherwise open end of the enclosure and may be of a temporary nature. The walls 10, 12, 14 enclose an array of substantially identical hollow columns 18 which are arranged on a triangular pitch and the outer two zigzag rows of columns 18S are filled with radiation attenuating material so as to constitute the fourth shielding side wall 16 of the enclosure. The remaining columns 18 serve as hollow storage shafts for drums of radioactive waste material, the drums in each column being stacked one above the other. Each storage column 18 may for example be dimensioned to receive a stack of nine drums.

Initially, the storage system may be designed to have a certain capacity, ie to store waste material generated over a time span of say a decade. When the initially designed capacity is exhausted, the capacity of the system can be readily expanded at relatively low capital cost by extending the array of columns 18 as shown in Figure 2, evacuating the contents of the original shielding columns 18S and filling the outermost rows 18S of the extended array with radiation-attenuating material. It will be appreciated that the columns formerly employed as shielding columns may then be used as storage shafts for the drums of waste material. In this way, the initial capital costs of building the storage system can be reduced compared with the costs of building a storage repository having a permanently fixed storage capacity.

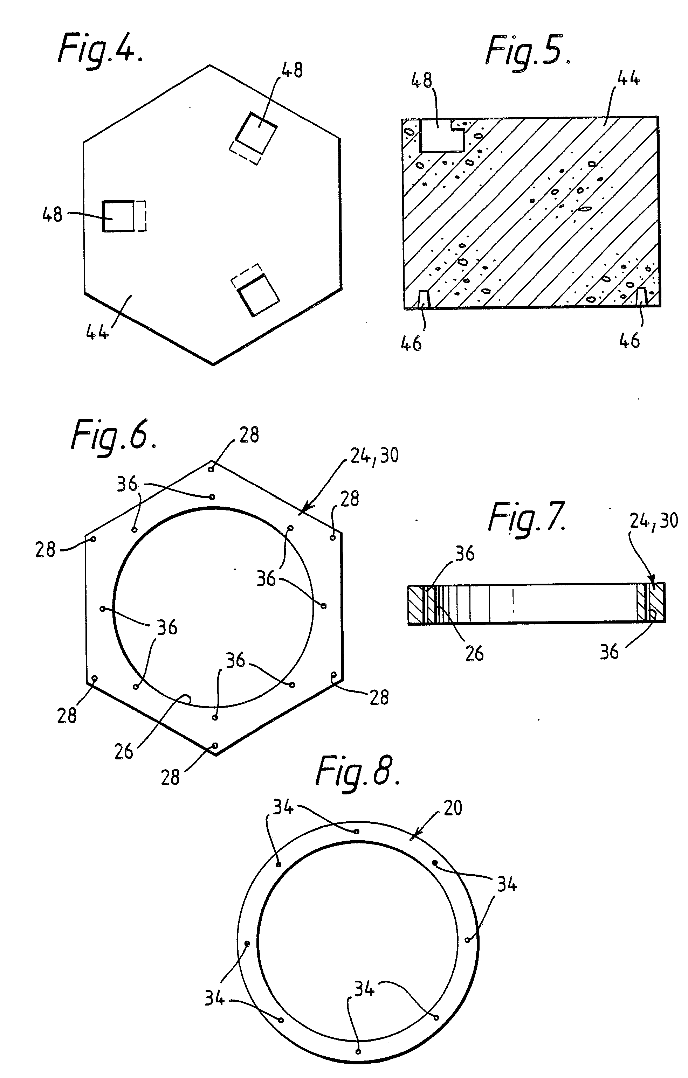

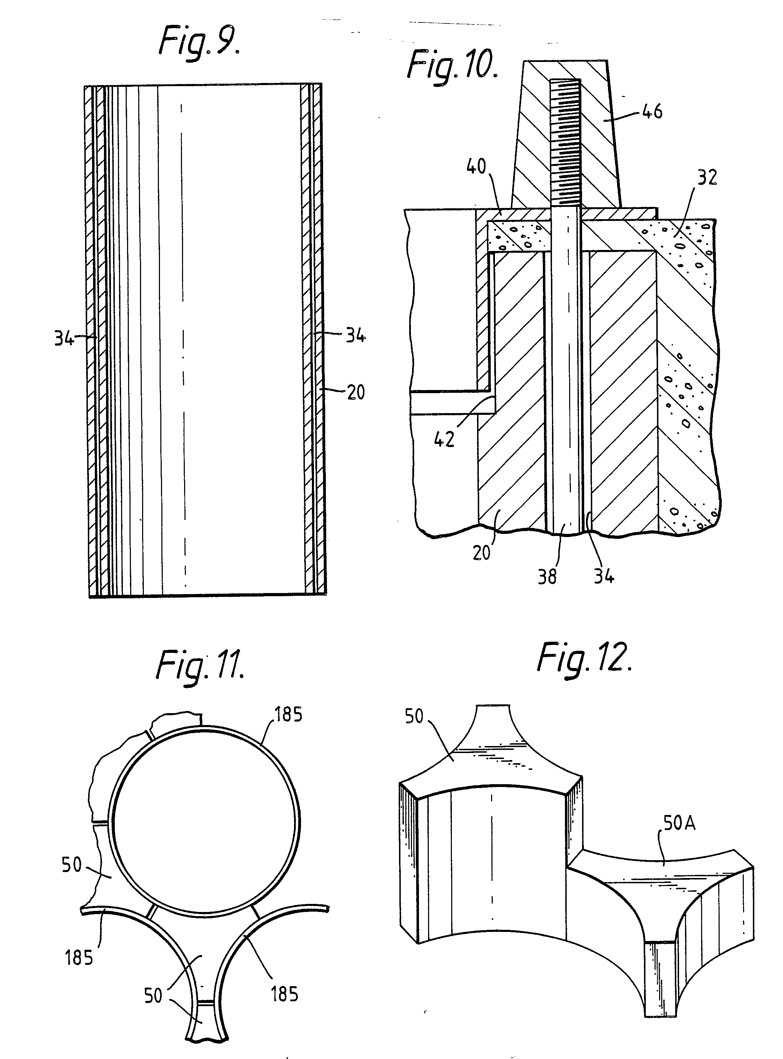

Referring to Figures 3-12, each column 18 (whether a storage column or a shielding column) is fabricated from pre-cast concrete sleeves 20 of cylindrical configuration having an inside diameter only slightly larger than the diameter of the drums, the sleeves being held in coaxial alignment with each other by any suitable means such as tie rods (as described below) or dowel and socket connections acting between the confronting end faces of successive sleeves 20. The lowermost sleeve 20 of each column is embedded in a weak mix concrete layer at the base of the storage system 22. At an intermediate vertical position, each column incorporates a pre-cast concrete stabilising unit 24 (see Figures 6 and 7) of hexagonal configuration having a central hole 26 of the same diameter as the inside diameter of the sleeves 20.

The stabilising units 24 are all located at substantially the same height so that, except around the perimeter of the array, each unit 24 is in face-to-face abutment with six of its neighbours. The abutting units 24 are secured together against relative lateral movement by suitable fasteners (not shown) engaging in holes 28 provided at the vertices of each hexagon so that each column in the array is securely interlocked at this intermediate height with its neighbours. The units 24 of those columns at the three perimetral sides of the array are secured by suitable fasteners to the walls 10, 12, 14.

Close to the top of each column, a second hexagonal stabilising unit 30 is provided, the units 30 being substantially identical to the units 24 and being arranged and interlocked with one another and the shielding walls 10, 12, 14 in the same manner as the units 24. A layer 32 of reinforced concrete is laid on the platform surface provided by the units 30 so that, at their tops, the columns are embedded in the concrete layer 32. In the illustrated embodiment, the sleeves 20 and units 24, 30 are linked together by tie rods extending through holes 34 in the sleeves 20 and holes 36 in the units 24, 36. One of the tie rods 38 is seen in Figure 10, the top end of the tie rods 38 being anchored by cone-shaped nuts 46 which seat on an angle-section mild steel ring 40 located at the top of each column 18, 18S, the uppermost sleeve 20 of each column being formed with a rebate 42 for receiving the downwardly-extending part of the ring 40.

The open top end of each column 18, 18S is provided with a pre-cast concrete shielding plug 44 of hexagonal shape, the edges of which may be protected by angle-section mild steel strips (not shown) to prevent chipping. Each plug 44 has, at its lower face, six sockets 46 which are arranged to register with the locating features provided by the cone-shaped nuts 46 so that when all of the plugs 44 are in place they mate with one another in a honeycomb pattern and provide a substantially continuous upper surface interrupted only by small clearance gaps to facilitate lifting of each plug 44 when access to one of the columns 18, 18S is required. Each plug 44 has, at its top face, a number of lifting features 48 constituted by mild steel fittings cast into the concrete plug. These features are designed to provide anchorage points at which the plug 44 can be engaged by a suitable grab mechanism (not shown) which is also designed to raise and lower drums within the columns 18 after the plug has been removed and placed to one side.

The zigzag rows of columns 18S are, as previously mentioned, filled with radiation-attenuating material which is in a form which allows the material to be readily evacuated when the storage capacity of the system is to be extended. The material may be particulate or granular, eg sand, or it may be of a thixotropic nature, eg a clay such as bentonite dispersed in a liquid, so as to form a gel which may be removed, when desired, by agitating the gel to cause it to become of a liquid consistency.

Each shielding column 18S is conveniently lined internally with a vapour barrier which, for example, may be provided by locating a tube of flexible plastics material (closed at its bottom end), along the length of the column, inflating the tube to cause it to expand to the inside diameter of the column, introducing the radiation-attenuating material into the inflated tube and finally sealing the top end of the plastics tube.

Where a granular or particulate material is employed as the filling for the columns 18S, two or more different particle size ranges may be used in aid of higher packing density of the material within the column.

Although in practice two rows of shielding columns 18S may suffice for shielding purposes, as an additional safeguard against radiation shine-through, the spaces between the shielding columns may be filled, at least partially by means of removable in fill blocks 50 stacked one on top of the other, such filling being preferably to the full height of each shielding column 18S. Some of the stacks of infill blocks 50 will include a different sized block 50A so that the horizontal interfaces between the infill blocks in one stack do not coincide with those between the infill blocks of an adjacent stack thereby eliminating possible radiation shine-through. Adjacent the shileding walls 12, 14 the gaps may be filled with an in situ concrete fill 52.

Although in the illustrated embodiment two rows of shielding columns are employed, the invention is not limited to this - for example it may be acceptable in some circumstances for there to be only a single row of shielding columns (especially if contiguous), if necessary with additional security provided by some form of in fill, eg in fill blocks as in the illustrated embodiment.

The system as a whole may be housed within a lightweight steel building equipped with an overhead crane and plug/drum handling grab. When the waste material has been stored for a sufficient length of time for the radioative components to decay to acceptably safe levels for disposal, it will be understood that the system may be readily dismantled by virtue of its construction. To facilitate dismantling, the walls 10, 12, 14 may be built up from pre-cast panels. The crane may be used both in the course of erecting and dismantling of the system. After the system has been dismantled, the building in which it is housed may be employed for other purposes.

Claims

1. A shielded enclosure for the storage of radioactive waste material in which a part of the shielding is constituted by a hollow structure filled with a fluent radiation-attenuating material which is evacuable when desired for reconstituting the shielding at a different boundary.

2. A shielded enclosure as claimed in Claim 1 in which the hollow structure comprises hollow columns each filled with the fluent radiation-attenuating material.

3. A shielded enclosure as claimed in Claim 2 and comprising an array of the hollow columns all of a size suitable for the stacking therein of drums in which the waste material is packaged, a boundary of the shielding being constituted by the filling of certain of these columns with the fluent radiation-attenuating material.

4. A shielded enclosure as claimed in Claim 2 or 3 in which spaces between those of the columns filled with the fluent radiation-attenuating material are filled, at least partially, by removable infill blocks (Figs 11 and 12) stacked one on top of the other.

5. A shielded enclosure as claimed in any of Claims 1 to 4 in which the radiation-attenuating material is of a particulate nature, such as sand.

6. A shielded enclosure as claimed in any of Claims 1 to 4in which the radiation-attenuating material is a thixotropic gel amenable to being rendered free flowing by agitation.

7. A shielded enclosure as claimed in any of Claims 1 to 6 in which the fluent radiation-attenuating material is contained within a liquid-impermeable sheath lining the respective hollow structure or column for preventing the ingress of moisture to the material.

Fig.1.

Fig.2.

Fig.3.

Fig.4.

Fig.5.

Fig.6.

Fig.7.

Fig.8.

EP 0 328 285 A2

Fig.9.

Fig.10.

Fig.11.

Fig.12.